(19) Europäisches Patentamt
European Patent Office
Office européen des brevets

(11) **EP 3 010 266 A1**

(12) **EUROPEAN PATENT APPLICATION**

(43) Date of publication:
**20.04.2016 Bulletin 2016/16**

(21) Application number: **14306629.8**

(22) Date of filing: **15.10.2014**

(51) Int Cl.:
***H04W 12/12*** *(2009.01)*
*H04W 12/06* *(2009.01)*
*H04L 29/06* *(2006.01)*
*H04W 12/10* *(2009.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **GEMALTO SA**
**92190 Meudon (FR)**

(72) Inventors:
- **Chen, Xiaoqiang**
  **13881 GEMENOS CEDEX (FR)**
- **Le Cardinal, Daniel**
  **13881 GEMENOS CEDEX (FR)**
- **Meyers, Tracy**
  **13881 GEMENOS CEDEX (FR)**
- **Petit, Sebastien**
  **13881 GEMENOS CEDEX (FR)**

# (54) Method for monitoring a status of a device, corresponding device, server and system

(57) The invention relates to a method 30 for monitoring a status of a device 12.

According to the invention, the device determines 32 whether a root status relating to a device operating system is an un-rooted device or a rooted device. The device generates 36 root authentication data depending upon the determined root status. The device sends 38 to a server 16 the root authentication data. The server determines 310, 318 whether the root authentication data does or does not match authentication data relating to an un-rooted device or authentication data relating to a rooted device. And only if the root authentication data does match either authentication data relating to an un-rooted device or authentication data relating to a rooted device, the server knows if the device is 312 an un-rooted device or 320 a rooted device respectively.

The invention also relates to corresponding device, server and system.

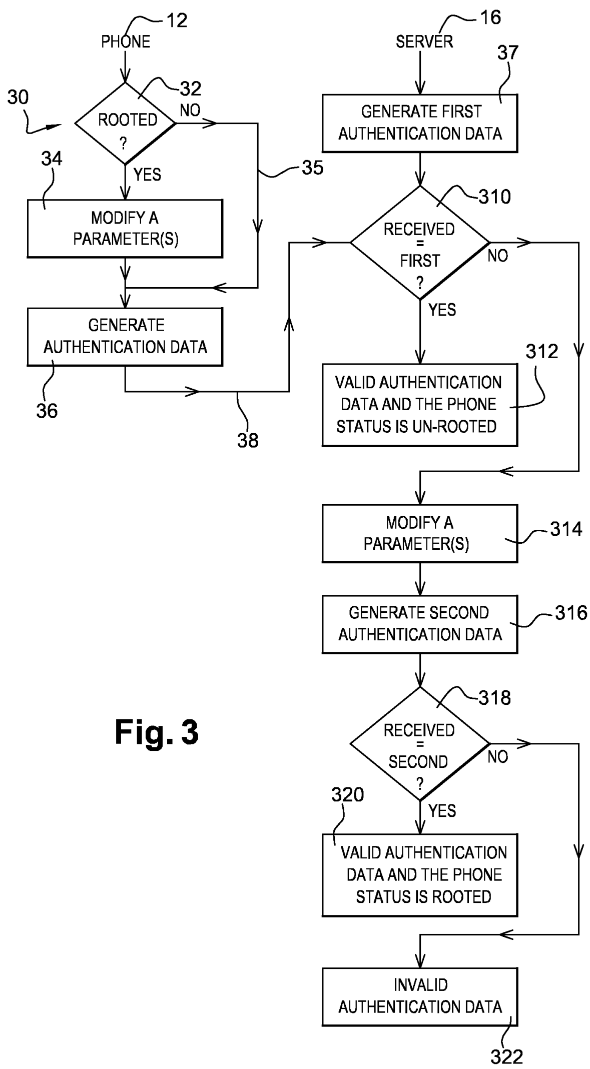


Fig. 3

EP 3 010 266 A1

## Description

### Field of the invention:

The invention relates generally to a method for monitoring a status of a device.

More exactly, a device may be in a status in which a device Operating System (or OS) is rooted.

Within the present description, a rooted device means that, in such a (device) status, one or several built-in security features are altered allowing thus an installed application to either operate in a privileged mode or access one or several resources. When executed, the application bypasses the altered security feature(s) that (is)are normally valid and do(es) not allow either such a priviliged mode operation or such a resource access authorization respectively.

Furthermore, the invention pertains to a device for monitoring its status. Moreover, the invention also relates to a server for monitoring a status of a device.

Finally, the invention pertains to a system for monitoring a status of a device as well.

### State of the art:

It is known to detect that a mobile (tele)phone which has an Androïd (registered trademark) OS or an iOS (registered trademark) that is altered by a root mechanism.

However, such a prior art solution does not allow that a server knows a rooted or an un-rooted status of the phone, as a device.

There is therefore a need to provide a solution that allows notifying, in a transparent manner, a server that the device is or is not altered by a root mechanism.

### Summary of the invention:

The invention proposes a solution for satisfying the just herein above specified need by providing a method for monitoring a status of a device.

According to the invention, the method comprises the following steps. the device determines whether a root status relating to a device operating system is an un-rooted device or a rooted device. The device generates root authentication data depending upon the determined root status. The device sends to a server the root authentication data. The server determines whether the root authentication data does or does not match authentication data relating to an un-rooted device or authentication data relating to a rooted device. And only if the root authentication data does match either authentication data relating to an un-rooted device or authentication data relating to a rooted device, the server knows if the device is an un-rooted device or a rooted device respectively.

The principle of the invention consists in that a device detects an OS status, produces root authentication data, as a cryptogram, by using the detected device status and sends the cryptogram to a server. The server ascertains whether the device is un-rooted or rooted by using the received cryptogram. The server is thus securely informed of a device status by the device that has issued the cryptogram.

The status of the OS of the device is firstly detected by the device. The detected device (OS) status is secondly taken into account for computing a corresponding cryptogram.

The cryptogram corresponds with information relating to a device status. The information relating to a device status is encrypted data and therefore not in plain text.

An access to the device status information is protected since the device status is hidden through corresponding cryptogram.

The device status information is only accessible to or verifiable by the server that is able to determine whether the device is un-rooted or rooted (or not) based on the cryptogram.

A communication of the device status information is therefore secure.

There is no constraint on a communication technology that is used by the device to transmit to the server the cryptogram. It may be through a wire, wireless, contact or contact-less link.

The transmission of the cryptogram may involve a device user who has to enter the cryptogram at the device side.

The invention solution does not require any additional user intervention, so that the server accesses the information relating to a device status.

Preferably, besides a determination of a device status, the server authenticates (or not) the device and/or a device user by using the received cryptogram relating to the detected device status.

Thus, besides the device status information, the server also authenticates, in a simultaneous manner, the device and/or the device user on a basis of the received cryptogram. In other words, the device status information that is received at the server side is concomitant with information about the device authentication and/or the device user authentication.

According to a further aspect, the invention is a device for monitoring its status.

According to the invention, the device is configured to determine whether a root status relating to a device operating system is an un-rooted or rooted status, to generate root authentication data depending upon the determined root status, and to send to a server the root authentication data.

As device, it may be a (user) terminal or any other device that is able to generate root authentication data and to communicate the generated root authentication data, as a cryptogram.

According still to a further aspect, the invention is a server for monitoring a status of a device.

According to the invention, the server is configured to receive root authentication data, to determine whether the root authentication data does or does not match authentication data relating to an un-rooted device or authentication data relating to a rooted device, and to know, only if the root authentication data does match either authentication data relating to an un-rooted device or authentication data relating to a rooted device, if the device is an un-rooted device or a rooted device respectively.

According still to a further aspect, the invention is a system for monitoring a status of a device.

According to the invention, the system comprises at least one such a device and at least one such a server connected or coupled to the at least one device.

**Brief description of the drawings:**

Additional features and advantages of the invention will appear more clearly when reading a detailed description of two preferred embodiments of the invention, given as indicative and non-limitative examples, in conjunction with the following drawings:

- Figure 1 illustrates a simplified diagram of one embodiment of a system including a mobile phone and a remote server, the phone being adapted to provide the server with a cryptogram depending on a detected un-rooted or rooted status of the phone OS, according to the invention; and
- Figures 2 and 3 represent a simplified scheme of a first and a second embodiment of a method for monitoring a status of the phone implemented by the phone and the server of figure 1 respectively, so that the server establishes based on the provided cryptogram if the phone OS is un-rooted or rooted.

**Detailed description:**

Herein under is considered a case in which the invention method for monitoring a status of a device is implemented by, at a client side, a mobile phone, as a stand-alone device, in cooperation with, at a server side, a distant server. The device does not cooperate with any token, so as to issue a cryptogram depending on a detected un-rooted or rooted device (OS) status.

Within the present description, a token or Secure Element (or SE) is a smart object that, on the one hand, protects, as a tamper resistant component, physically access to data that the smart object stores and, on the other hand, is intended to communicate with the outside world.

As token, it may be constituted by a Subscriber Identity Module (or SIM) type smart card, a smart Universal Serial Bus (or USB) type dongle, a mass-storage card, like a MMC (acronym for "MultiMediaCard"), an SD (acronym for "Secure Digital") type card and/or any other electronic medium that may have different form factors. According to still other examples, the token is a chip to be either fixed, possibly in a removable manner, to a host computer, or soldered within a host computer, as a user terminal.

According to another embodiment (not represented), the invention method for monitoring a status of a device may be implemented by, at the client side, a mobile phone in cooperation with a token. In other words, the device interacts with the token, so as to generate a cryptogram that the server uses in order to determine whether the device is an un-rooted or a rooted device. According to such an embodiment, the token is adapted to carry out functions that are carried out by the device and that are described infra in relation with a cryptogram generation by the phone.

Naturally, the two herein below described embodiments are only for exemplifying purposes and are not considered to reduce the scope of the invention.

**Figure 1** shows a system 10 for monitoring a status of a mobile phone, as a device.

The system 10 comprises a mobile phone 12, as a user terminal, and a remote server 16.

For the sake of clarity and conciseness, the mobile phone 12 and the remote server 16 are termed herein after the phone 12 and the server 16 respectively.

Instead of a user terminal, it may be any other electronic device, like a token including a radio modem that allows accessing a network which is connected to the server 16.

Instead of a phone, the user terminal may include, among others, e.g. a handset, a smart phone, a Personal Digital Assistant (or PDA), a tablet computer and/or an electronic mobile equipment (e.g. glasses or a watch) or any

other data computing means provided with an OS that may be rooted.

It is to be noted that only one phone 12 is represented at the client side for clarity reason. However, the server 16 is connected to a fleet of such client devices and/or systems, like e.g. a terminal coupled to a token, that carries out a root authentication data generation and a transmission (through the terminal or not) of the generated root authentication data that are specified infra.

The phone 12 is connected, through one (or several) bi-directional wireless link(s) 13, over one (or several) data communication network(s) 14, to the server 16.

Within the present description, the adjective "wireless" used within the expression "wireless link(s)" means notably that the link(s) include(s) one or several RadioFrequency (or RF) links that may be short or long.

A Short Range (or SR) RF(s) may be fixed from around 2,4 GHz to around 10 GHz (for Ultra WideBand (or UWB), e.g. IEEE 802.15.4a), at 2,4-2,5 GHz with a range of about 10 m to 100 m (for Zigbee (e.g. IEEE 802.15.4), Wifi and Bluetooth or Bluetooth low energy (e.g. IEEE 802.15.1) and/or other RF value(s) allowing to communicate with an SR distance (typically from about 10 cm to about 800 m).

The data communication network(s) 14 may include one or several SR radio-communication networks.

An SR radio-communication network(s) may include a WLAN (acronym for "Wireless Local Area Network"), a Bluetooth, a Wifi, a Metropolitan Area Network (or MAN), a Worldwide Interoperability for Microwave Access (or WiMax) and/or a Wireless BROadband (or WIBRO) radio-communication type technology(ies).

Such an SR radio-communication network list is not exhaustive but only for exemplifying purposes.

The data communication network(s) 14 may include one or several mobile radio-communication networks, as a Long Range (or LR) radio-communication network(s).

An LR RF(s) may be fixed at several hundreds of MHz, for instance, around 850, 900, 1800, 1900 MHz, 2 GHz and/or more.

The mobile radio-communication network(s) may be constituted by a Global System for Mobile Communications (or GSM), a General Packet Radio Service (or GPRS), an EDGE (acronym for "Enhanced Data Rates for GSM Evolution"), a Universal Mobile Telecommunications System (or UMTS), a Code Division Multiple Access (or CDMA) and/or a Long Term Evolution (or LTE) type network(s).

The mobile radio-communication network list, as an LR radio-communication network list, is not exhaustive but only for exemplifying purposes.

The data communication network(s) 14 may include or be connected to an Internet network.

The data communication network(s) 14 may be accessible, from a client side, over an Access Point (or AP), like a Wifi hotspot.

The phone 12 includes preferably a keyboard 122 and a display screen 124, as Man Machine Interface (or MMI). The MMI allows a user to interact with the phone 12 and/or any entity connected to the phone 12, like notably the server 16.

According to a particular embodiment (not represented), instead of two separate functional elements as MMI, the phone 12 includes a touch sensitive display screen that displays a virtual keyboard, when activated.

The phone 12 has an antenna 126 that allows communicating, Over The Air (or OTA), via the bi-directional wireless link 13, through the network 14, with the server 16.

The phone 12 includes one (or several) microprocessor(s) (not represented), as data processing means, volatile and non-volatile memories (not represented), as means for storing data, and one or several Input/Output (or I/O) interfaces (not represented) linked together through a data and control bus (not represented).

The (phone) microprocessor processes and controls data within the phone 12 and/or data to be exchanged with outside of the phone 12. The microprocessor controls and communicates with all the components of the phone 12, such as the I/O interfaces.

The (phone) memories store data notably relating to an OS and one or several applications supported by the phone 12.

The memories may be constituted by one or several EEPROMs (acronym for "Electrically Erasable Programmable Read-Only Memory"), one or several ROMs (acronym for "Read Only Memory"), one or several Flash memories, and/or any other memories of different types, like one or several RAMs (acronym for "Random Access Memory").

A phone memory stores preferably an International Mobile Equipment Identity (or IMEI) and/or an email address, as an identifier(s) relating to the phone 12.

The phone 12 is able to determine whether a status relating to the phone (OS), as root status, is an un-rooted or a rooted status.

A phone 12 memory stores a cryptogram generation application, as an invention application supported by the phone 12 (or a cooperating token).

According to an essential feature of the invention, the phone 12 is configured to generate authentication data, as root authentication data and a cryptogram, that depends on the determined root status.

Alternatively, instead of the phone, a second device, like e.g. a token, coupled or connected to the phone, is

adapted to generate root authentication data based on a root status detected by the phone.

If the phone 12 detects that its OS is un-rooted, then the phone 12 generates a first cryptogram relating to an un-rooted phone, termed infra the first cryptogram.

To generate the first cryptogram, the phone 12 uses a predetermined algorithm relating to an un-rooted phone. The predetermined algorithm relating to an un-rooted phone is stored within a phone memory. The un-rooted phone algorithm may include an encryption algorithm, such as e.g. an Advanced Encryption Standard (or AES), a Data Encryption Standard (or DES) or a 3DES type algorithm or the like, or any algorithm that uses a symmetric or shared key. Alternately or additionally, the un-rooted phone algorithm may include a phone authentication algorithm or a phone user authentication algorithm, like e.g. a user password generation algorithm, such as a On-Time Password (or OTP) generation algorithm, as a predetermined first algorithm.

If the phone 12 detects that its OS is rooted, then the phone 12 generates a second cryptogram relating to a rooted phone, termed infra the second cryptogram.

The second cryptogram is separate and distinct from the first cryptogram.

To generate the second cryptogram, the phone 12 uses a predetermined algorithm relating to a rooted phone that is distinct from the predetermined algorithm relating to an un-rooted phone.

The algorithm relating to a rooted phone may modify or alter the first cryptogram resulting from the algorithm relating to an un-rooted phone. For instance, the rooted phone algorithm modifies the first cryptogram relating to an un-rooted phone by using a predetermined second algorithm, like e.g. a scrambling algorithm. As a scrambling algorithm, it may be e.g. a chain of modulus 10 additions for each digit while bypassing the fifth digit which is copied without any modification that may be represented by the following scheme:

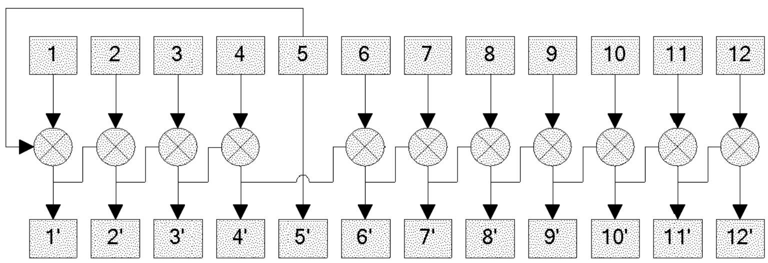


Such a scrambling algorithm may be represented by the following mathematical formula:

$$n' = (n+IV) \bmod 10;$$

in which:

- n' represents a digit of a cryptogram relating to a rooted phone, as an output;
- n denotes a digit of a cryptogram relating to an un-rooted phone, as an input;
- IV represents an Initial Value of the fifth digit of the input; and
- mod denotes a modulo function.

For example, if we have, as input, the following digits 630 243 848, and, as IV, 4, then we get, as output, the following digits 033 548 608.

Alternately or additionally, the rooted phone algorithm modifies, by using a predetermined third algorithm, one or several (input) parameter(s) of the un-rooted phone algorithm. The third algorithm may be a key modification algorithm that uses a first key, as an input parameter relating to the un-rooted phone algorithm. The key modification algorithm may consist in, e.g. reverting bit per bit the first key. For instance, if we have, as a first key relating to an un-rooted phone, the following input:

- 0xA8 0xB2...0x59 (written in hexadecimal),
  then we get, as a second key relating to a rooted phone, the following output:
- 0x57 0x4D...0xA6 (written in hexadecimal).

According to another alternative, the rooted phone algorithm changes one or several (input) parameter(s) of the un-rooted phone algorithm. For instance, the un-rooted phone algorithm uses a predetermined first encryption key

whereas the rooted phone algorithm uses a predetermined second encryption key that is distinct from the first encryption key.

The un-rooted phone algorithm and the rooted phone algorithm are stored within a phone memory.

The first and the second or the third algorithm are also stored within a phone memory.

The generated cryptogram, be it either the first or the second cryptogram, allows determining securely a root status of the phone 12 (OS) and ensuring that an access to information relating to such a root status is protected.

The first and second cryptograms reflect each an associated root status, namely an un-rooted status and a rooted status respectively.

The phone 12 is adapted to transmit the generated cryptogram, namely either the first cryptogram or the second cryptogram, to a predetermined entity(ies), like e.g. the server 16.

A phone memory stores preferably a Uniform Resource Identifier (or URI), like a Uniform Resource Locator (or URL), a call phone number, a video-conference call phone number, an email address, an Internet Protocol (or IP) type address and/or the like, as an identifier(s) relating to an intended addressee of the generated cryptogram, like e.g. the server 16.

Any third party, like e.g. a phone user, a potential malware or a potential hacker, is not able to know if there is or is not a link between an issued cryptogram and a (detected) root status of the phone 12 since the third party does not know how the cryptogram is established and therefore how to interpret the cryptogram.

Only an entity(ies), like the server 16, as an intended receiver(s) of the cryptogram, that share(s) with the phone 12, as a sender of the cryptogram, one or several secrets that are used for generating the cryptogram is able to know if the root (phone) status is an un-rooted or a rooted status.

The server identifier(s) is(are) used for transferring, by the phone 12, acting as a client device, to the server 16 notably a cryptogram, as a result of the cryptogram generation application supported by the phone 12 (or a token cooperating with the phone).

The server 16 may be a so-termed Over-The-Air (or OTA) or Over-The-Internet (or OTI) server 16.

The server 16 may be operated by a bank operator, a mobile radio-communication network operator, a service provider and/or on its behalf.

The server 16 is accessible through the data communication network(s) 14.

According to a particular embodiment, the server 16 is connected, through a bi-directional wire link 15, to the data communication network(s) 14.

The server 16 is hosted by a computer.

According to a preferred embodiment, the server 16 is hosted by or coupled to a Hardware Security Module (or HSM) (not represented) that stores, manages (digital) keys and provides a crypto-processing service(s) in a secure manner.

The server 16 includes a microprocessor(s) (not represented), as data processing means.

The server 16 includes a memory 18, as data storing means.

Alternatively (not represented), instead of an internal memory, the server 16 is connected to an external memory.

According to a particular embodiment, the server memory 18 stores an invention client authentication application that allows authenticating the client device and possibly its user and knowing if the client device is an un-rooted or a rooted device. Such an invention client authentication application is supported by the server 16.

Alternatively (not represented), instead of a remote server, the server is embedded within an entity, like a terminal or a token, and is locally accessible, i.e. up to 10 m via an SR RF link, from the phone 12, as user terminal.

The server 16 is adapted to detect an un-rooted or a rooted status relating to a client device.

The server memory 18 stores a database.

The server 16 manages the database and may communicate to outside data relating to the database, after a possible data processing.

The database contains data that relates to a plurality of client devices including the phone 12.

The data of the database includes preferably, for each client device:

- an identifier relating to the client device, as server interlocutor;
- a predetermined algorithm relating to an un-rooted device;
- a possible input parameter(s) and/or algorithm(s) relating to the predetermined algorithm relating to an un-rooted device;
- a predetermined algorithm relating to a rooted device;
- a possible input parameter(s) and/or algorithm(s) relating to the predetermined algorithm relating to a rooted device; and possibly
- an associated status of the client device.

The predetermined algorithm relating to an un-rooted (client) device and the corresponding possible input

parameter(s) and/or algorithm(s) are shared between the server 16 and the concerned device.

Likewise, the predetermined algorithm relating to a rooted (client) device and the corresponding possible input parameter(s) and/or algorithm(s) are shared between the server 16 and the concerned device.

The associated client device status may be either initially predefined, by default, as an un-rooted device or not defined, until at least one first implementation of a client authentication of the concerned client device by the server 16 which allows registering a resulting device status.

The registered client device status may be modified at each implementation of the client device authentication process, as an invention device status monitoring method. Once one or several client device authentication processes have been implemented, a last status of the concerned client device is registered. The last status is determined as will be further explained.

The server 16 is able to receive data that may be root authentication data that is generated by using an un-rooted or a rooted status detected at the client device side.

According to an essential feature of the invention, the server 16 is adapted to determine whether the received data does or does not match authentication data relating to an un-rooted (client) device or authentication data relating to a rooted (client) device.

The received data may match first reference authentication data relating to an un-rooted device or second reference authentication data relating to a rooted device.

For sake of simplicity, the first reference authentication data relating to an un-rooted device and the second reference authentication data relating to a rooted device are termed infra the first reference and the second reference respectively.

Prior to determining whether the received data does or does not match the first reference, the server 16 is adapted to generate a first reference.

To generate the first reference, the server 16 uses the algorithm relating to an un-rooted (client) device and the corresponding possible input parameter(s) and/or algorithm(s).

As input parameter(s) relating to the predetermined un-rooted device algorithm, the server 16 may use a first key that is shared with the concerned client device.

The server 16 may compare firstly the received data to the first reference.

If the received data matches the first reference, then the server 16 notes that the concerned client device is authenticated and registers that the concerned device is un-rooted.

If the received data does not match the first reference, then the server 16 generates a second reference.

To generate the second reference, the server 16 uses the algorithm relating to a rooted (client) device and the corresponding possible input parameter(s) and/or algorithm(s).

As input parameter(s) relating to the rooted device algorithm, the server 16 may use a second key that is shared with the concerned client device.

According to a first embodiment, the un-rooted device algorithm and the rooted device algorithm share one and the same first algorithm. Additionally, the rooted device algorithm further includes a predetermined second algorithm that modifies a first cryptogram, as generated un-rooted authentication data and a first result originating from the first algorithm, into a second cryptogram, as generated rooted authentication data and a second result originating from the second algorithm. The predetermined second algorithm is shared with the concerned client device. The first algorithm may be constituted by e.g. a password generation algorithm while the second algorithm may be constituted by e.g. a scrambling algorithm. The second algorithm may be diversified for each client device, so as to render the second reference dependent on the client device.

According to a second embodiment, the un-rooted device algorithm and the rooted device algorithm share one and the same first algorithm. Additionally, the rooted device algorithm further includes a predetermined third algorithm that modifies an input parameter(s) relating to the un-rooted device. The predetermined third algorithm is shared with the concerned client device. The first algorithm may be constituted by e.g. a password generation algorithm while the third algorithm may be constituted by e.g. a key generation algorithm by using or not an input parameter(s), like e.g. a first key, relating to the un-rooted device algorithm.

The server 16 may compare secondly the received data to the second reference.

Alternately, instead of comparing the received data to the first reference and then, in case of no matching, to the second reference, the server 16 compares in reverse. In other words, the server 16 compares firstly the received data to the second reference and secondly, in case of no matching, to the first reference.

If the received data matches the second reference, then the server 16 notes that the concerned client device is authenticated and that the concerned device is rooted.

If the received data does match neither the first reference nor the second reference, i.e. the received data originates from a considered client device that shares neither the un-rooted device algorithm nor the rooted device algorithm, then the server 16 is unable to authenticate the originator of the received data. The received data is not valid since it does not match any root authentication data, as a cryptogram that is expected by the server 16. The concerned

sender may be probably a device which is not registered at the server 16 side or a registered device that encountered an issue(s) and/or that undergoes a malicious application or a possible attack of an hacker that issues a fake cryptogram.

Once the server 16 has determined or not a corresponding root status for a considered client device, the server 16 updates the database by modifying a root status associated with the concerned client device.

The server 16 may register and undertake different actions with respect to a client device which the server 16 knows that the client device is a rooted device or has issued un-expected data, possibly wrong data modified or issued by a malware at the client side. The actions may depend on a level of trust of the determined device status, like e.g. low, medium or high.

As action(s), it may include, e.g. to inform a concerned device user about a rooted device status or non-recognition of the concerned device, to delete some data, like e.g. secret data, such as a key(s) for accessing a service, stored initially at the concerned client side, to block at a server side a device user account and/or to limit a transaction amount at a server side.

The server 16 (and/or another entity sharing with the concerned data issuing device, the un-rooted device algorithm and/or the rooted device algorithm) is thus adapted to determine, based on received data, whether a data issuing device is an un-rooted device or a rooted device.

Figure 2 depicts a first exemplary embodiment of a method 20 for monitoring a status of the phone 12 that involves the phone 12, a phone user (not represented) and the server 16 to determine or not whether the phone 12 (OS) is un-rooted or rooted.

It is assumed that the phone 12 and the server 16 are both used for authenticating (or not) the phone user by sharing a predetermined OTP generation algorithm, as a first algorithm (relating to an un-rooted phone and a rooted phone).

It is also assumed that the phone 12 and the server 16 are both used for authenticating (or not) the phone user by sharing a predetermined scrambling algorithm, as a second algorithm (relating to a rooted phone).

Firstly, the phone 12 detects 22 whether the phone 12 is either un-rooted or rooted.

If the phone 12 is in an un-rooted status, as phone root status, then the phone 12 generates 24 by using the first algorithm a first OTP 1, as a first cryptogram relating to an un-rooted phone.

Otherwise, i.e. if the phone 12 is in a rooted status, the phone 12 generates 26 a second OTP 2, as a second cryptogram relating to a rooted phone. To generate the second cryptogram relating to a rooted phone, the phone 12 may use firstly the first algorithm and secondly the second algorithm that uses a result originating from the first algorithm.

Once the first cryptogram relating to an un-rooted phone or the second cryptogram relating to a rooted phone has been generated, the phone 12 displays (not represented), through the phone display screen 124, the first OTP 1 or the second OTP 2 along with a displayed message that requests a phone user to enter or type the displayed OTP, as first OTP 1 or second OTP 2. Then, the phone user enters or types the displayed OTP.

The phone 12 stores the (user) OTP, namely the first OTP 1 or the second OTP 2, as root authentication data provided by the phone user.

The provided (user) OTP is valid only once and depends on the root status relating to the phone 12, namely either an un-rooted status or a rooted status.

After having been provided by the entered or typed OTP, the phone 12 sends 28 to the server 16 the provided OTP, namely the first OTP 1 or the second OTP 2.

According to a preferred embodiment, prior to receiving data, the server 16 generates 27, by using the first algorithm, a first OTP 1, as first reference authentication data relating to an un-rooted phone termed herein after the first reference.

Alternately, instead of generating the first reference before receiving data from the concerned client device, the server 16 generates (not represented), by using the first algorithm, the first reference after having received data from an identified (client) device.

Once the first reference is generated, the server 16 verifies 210 whether the received data, as assumed root authentication data, does or does not match the first reference.

Only if the received data matches the first reference, then the server 16 knows 212 that the authentication data is valid and that the phone 12 is in an un-rooted status.

Otherwise, i.e. only if the received data does not match the first reference, the server 16 generates 214 a second OTP 2, as second reference authentication data relating to a rooted phone termed herein after the second reference. To generate the second reference, the server 16 may use the first then the second algorithm that uses a result originating from the first algorithm. The first and second algorithms are shared between the phone 12 and the server 16.

Once the second reference is generated, the server 16 verifies 216 whether the received data, as assumed root authentication data, does or does not match the second reference.

Only if the received data matches the second reference, then the server 16 knows 218 that the authentication data is valid and that the phone 12 is in a rooted status.

Otherwise, i.e. if the received data does match neither the first reference nor the second reference, the server 16 knows 220 that the authentication data is invalid and therefore does not know if the phone 12 is in an un-rooted or a rooted status.

Figure 3 shows a second exemplary embodiment of a method 30 for monitoring a status of the phone 12 that involves the phone 12, a phone user (not represented) and the server 16 to determine or not whether the phone 12 (OS) is un-rooted or rooted.

It is assumed that the phone 12 and the server 16 are both used for authenticating (or not) the phone user by sharing a predetermined OTP generation algorithm, as a first algorithm relating to an un-rooted phone and a rooted phone. The first algorithm uses a predetermined first key when the phone 12 detects an un-rooted status and a second key to be determined when the phone 12 detects a rooted status.

The phone 12 stores the first key to be used for generating an OTP.

It is also assumed that the phone 12 and the server 16 are both used for authenticating (or not) the phone user by sharing a predetermined key generation algorithm, as a third algorithm relating to a rooted phone, that is used for generating a second key (relating to a rooted phone).

Firstly, the phone 12 detects 32 whether the phone 12 is either un-rooted or rooted.

If the phone 12 is in a rooted status, as phone root status, the phone 12 modifies 34 a first key, as an input parameter of the first algorithm, by using the third algorithm for generating a second key to be used for generating an OTP (instead of the first key). The phone 12 then generates 36, by using the generated second key, a second OTP 2, as a second cryptogram relating to a rooted phone.

Otherwise, i.e. if the phone 12 is in an un-rooted status, as phone root status, then the phone 12 generates 36, by using the first algorithm and the first key, a first OTP 1, as a first cryptogram relating to an un-rooted phone, without modifying 35 any input parameter of the first algorithm.

Once the first cryptogram relating to an un-rooted phone or the second cryptogram relating to a rooted phone has been generated, the phone 12 displays (not represented), through the phone display screen 124, the first OTP 1 or the second OTP 2 along with a displayed message that requests a phone user to enter or type the displayed OTP, as first OTP 1 or second OTP 2. Then, the phone user enters or types the displayed OTP.

The phone 12 stores the (user) OTP, namely the first OTP 1 or the second OTP 2, as root authentication data provided by the phone user.

The provided (user) OTP is valid only once and depends on the root status relating to the phone 12, namely either an un-rooted status or a rooted status.

After having been provided by the entered or typed OTP, the phone 12 sends 38 to the server 16 the provided OTP, namely the first OTP 1 or the second OTP 2.

According to a preferred embodiment, prior to receiving data, the server 16 generates 37, by using the first algorithm, a first OTP 1, as first reference authentication data relating to an un-rooted phone termed herein after the first reference.

Alternately, instead of generating the first reference before receiving data from the concerned client device, the server 16 generates (not represented), by using the first algorithm, the first reference after having received data from an identified (client) device.

Once the first reference is generated, the server 16 verifies 310 whether the received data, as assumed root authentication data, does or does not match the first reference.

Only if the received data matches the first reference, then the server 16 knows 312 that the authentication data is valid and that the phone 12 is in an un-rooted status.

Otherwise, i.e. only if the received data does not match the first reference, the server 16 modifies 314 the first key, as an input parameter of the first algorithm, by using the third algorithm for generating a second key to be used for generating an OTP (instead of the first key). The server 16 then generates 316, by using the generated second key, a second OTP 2, as second reference authentication data relating to a rooted phone termed herein after the second reference.

Once the second reference is generated, the server 16 verifies 318 whether the received data, as assumed root authentication data, does or does not match the second reference.

Only if the received data does match the second reference, then the server 16 knows 320 that the authentication data is valid and that the phone 12 is in a rooted status.

Otherwise, i.e. if the received data does match neither the first reference nor the second reference, the server 16 knows 322 that the authentication data is invalid and therefore does not know if the phone 12 is in an un-rooted or a rooted status.

According to the first or second exemplary described embodiment, the phone 12 exchanges with the server 16 by using e.g. HyperText Transfer Protocol (or HTTP) and/or Short Message Service (or SMS) type messages. However, any other data communication protocol between the phone 12 and the server 16, like e.g. a secured data communication protocol (securing in confidentiality and/or in integrity the data thus exchanged) Transport Layer Security

(or TLS) protocol, may be used additionally to the HTTP and/or SMS protocol(s).

Such an invention solution is flexible since the server 16 is able to adapt a security policy and to carry out a risk management at the server side that is more secure than to carry it out at the client device side.

Such an invention solution is transparent to the phone user since she or he is not aware of the way the client device authentication data, as a cryptogram, has been generated.

The thus generated cryptogram reflects the considered root device status. More exactly, the first cryptogram corresponds with an un-rooted status and the second cryptogram corresponds with a rooted status.

The generated cryptogram, be it either the first or the second cryptogram, allows determining, in a secure manner, a root status of the considered client device (OS) and ensuring that an access to information relating to such a root status is protected.

The invention solution is secure since the client device root status is transmitted covertly to the server 16, due to a use of a cryptogram based on the root status of the concerned client device, as non-clear data.

Moreover, the invention solution is non-obtrusive and user friendly since such a client device root status transmission does not need to involve the user except for a possible user authentication.

The invention solution needs to generate one cryptogram at the client device side that is dependent on a client device root status and to be checked by the server 16 by generating at least one cryptogram at the server 16 side.

The invention solution is secure since only the server 16, as an entity that shares with a client device an algorithm relating to an un-rooted client device and an algorithm relating to a rooted device, is able to check a cryptogram provided by the concerned client device.

The invention solution allows avoiding a fake rooted status since the server 16 detects, in such a case, that the received data is invalid.

## Claims

1. A method (20; 30) for monitoring a status of a device (12),
**characterized in that** the method comprises the following steps:

    - the device determines (22; 32) whether a root status relating to a device operating system is an un-rooted device or a rooted device;
    - the device generates (24, 26; 36) root authentication data depending upon the determined root status;
    - the device sends (28; 38) to a server (16) the root authentication data;
    - the server determines (210, 216; 310, 318) whether the root authentication data does or does not match authentication data relating to an un-rooted device or authentication data relating to a rooted device; and
    - only if the root authentication data does match either authentication data relating to an un-rooted device or authentication data relating to a rooted device, the server knows if the device is (212; 312) an un-rooted device or (218; 320) a rooted device respectively.

2. Method according to claim 1, wherein

    - the server generates (27, 214; 37, 316) authentication data by using a predetermined first algorithm, the generated authentication data being first reference authentication data relating to an un-rooted device;
    - the server determines (210 ; 310) whether the root authentication data does or does not match the first reference authentication data relating to an un-rooted device;
    - only if the root authentication data does not match the first reference authentication data relating to an un-rooted device, then the server determines (216; 318) second reference authentication data relating to a rooted device and the server determines whether the root authentication data does or does not match the second reference authentication data relating to a rooted device; and
    - only if the root authentication data does match the second reference authentication data relating to a rooted device, then the server authenticates (218; 320) the device and also knows that the device is a rooted device.

3. Method according to 2, wherein, prior to sending the root authentication data, the device generates authentication data by using the predetermined first algorithm, if the determined root status relating to the device operating system is a rooted status, then the device modifies (26) the generated authentication data by using a predetermined second algorithm, the modified generated authentication data being the root authentication data depending upon the rooted device and wherein, only if the root authentication data does not match the first reference authentication data relating to an un-rooted device, then the server modifies (214) the generated authentication data by using the predetermined second algorithm, the modified generated authentication data being the second reference authentication data relating

to a rooted device.

**4.** Method according to claim 3, wherein the predetermined second algorithm includes a scrambling algorithm.

**5.** Method according to claim 2, wherein, prior to sending the root authentication data, if the determined root status relating to the device operating system is a rooted status, then the device modifies, by using (34) a predetermined third algorithm, at least one predetermined parameter that is used for generating (36) authentication data and generates root authentication data depending upon the rooted device by using the at least one modified parameter and the first algorithm, the root authentication data depending upon the rooted device being distinct from the root authentication data depending upon the un-rooted device and wherein, only if the root authentication data does not match the first reference authentication data relating to an un-rooted device, then the server also modifies, by using (314) the predetermined third algorithm, at least one predetermined parameter that is used for generating (316) authentication data and generates authentication data by using the at least one modified parameter and the first algorithm, the generated authentication data being the second reference authentication data relating to a rooted device.

**6.** Method according to claim 3, wherein the predetermined third algorithm includes a key generation algorithm.

**7.** Method according to any of claims 1 to 6, wherein, prior to sending the root authentication data, the root authentication data including a user password, the device displays or lets display the generated user password, the device user enters the user password and, subsequently, if the root authentication data does match either authentication data relating to an un-rooted device or authentication data relating to a rooted device, the server also authenticates the device user.

**8.** A device (12) for monitoring its status,
**characterized in that** the device is configured to:

- determine whether a root status relating to a device operating system is an un-rooted or rooted status;
- generate root authentication data depending upon the determined root status; and
- send to a server the root authentication data.

**9.** A server (16) for monitoring a status of a device,
**characterized in that** the server is configured to:

- receive root authentication data;
- determine whether the root authentication data does or does not match authentication data relating to an un-rooted device or authentication data relating to a rooted device; and
- know, only if the root authentication data does match either authentication data relating to an un-rooted device or authentication data relating to a rooted device, if the device is an un-rooted device or a rooted device respectively.

**10.** A system for monitoring a status of a device,
**characterized in that** the system comprises at least one device (12) and at least one server (16) connected or coupled to the at least one device,
**in that** the at least one device is a device according to claim 8; and
**in that** the at least one server is a server according to claim 9.

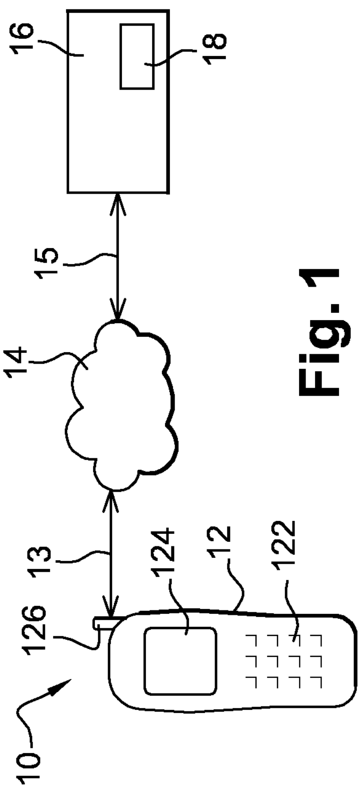
10
126
124
13
12
122
14
15
16
18

Fig. 1

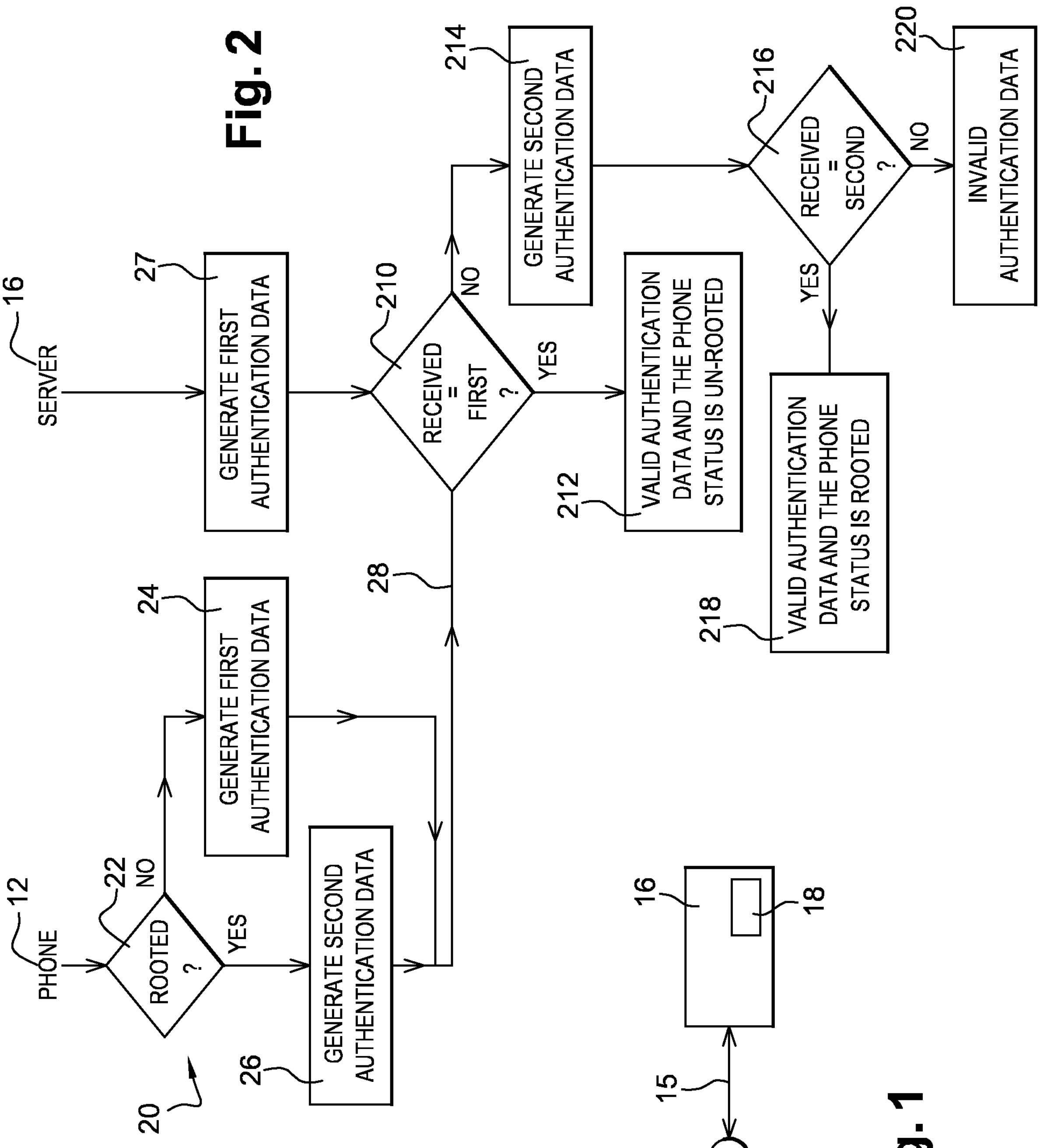
PHONE
12
20
22
ROOTED ?
NO
YES
24
GENERATE FIRST AUTHENTICATION DATA
26
GENERATE SECOND AUTHENTICATION DATA
28
SERVER
16
27
GENERATE FIRST AUTHENTICATION DATA
210
RECEIVED = FIRST ?
YES
NO
212
VALID AUTHENTICATION DATA AND THE PHONE STATUS IS UN-ROOTED
214
GENERATE SECOND AUTHENTICATION DATA
216
RECEIVED = SECOND ?
YES
NO
218
VALID AUTHENTICATION DATA AND THE PHONE STATUS IS ROOTED
220
INVALID AUTHENTICATION DATA

Fig. 2

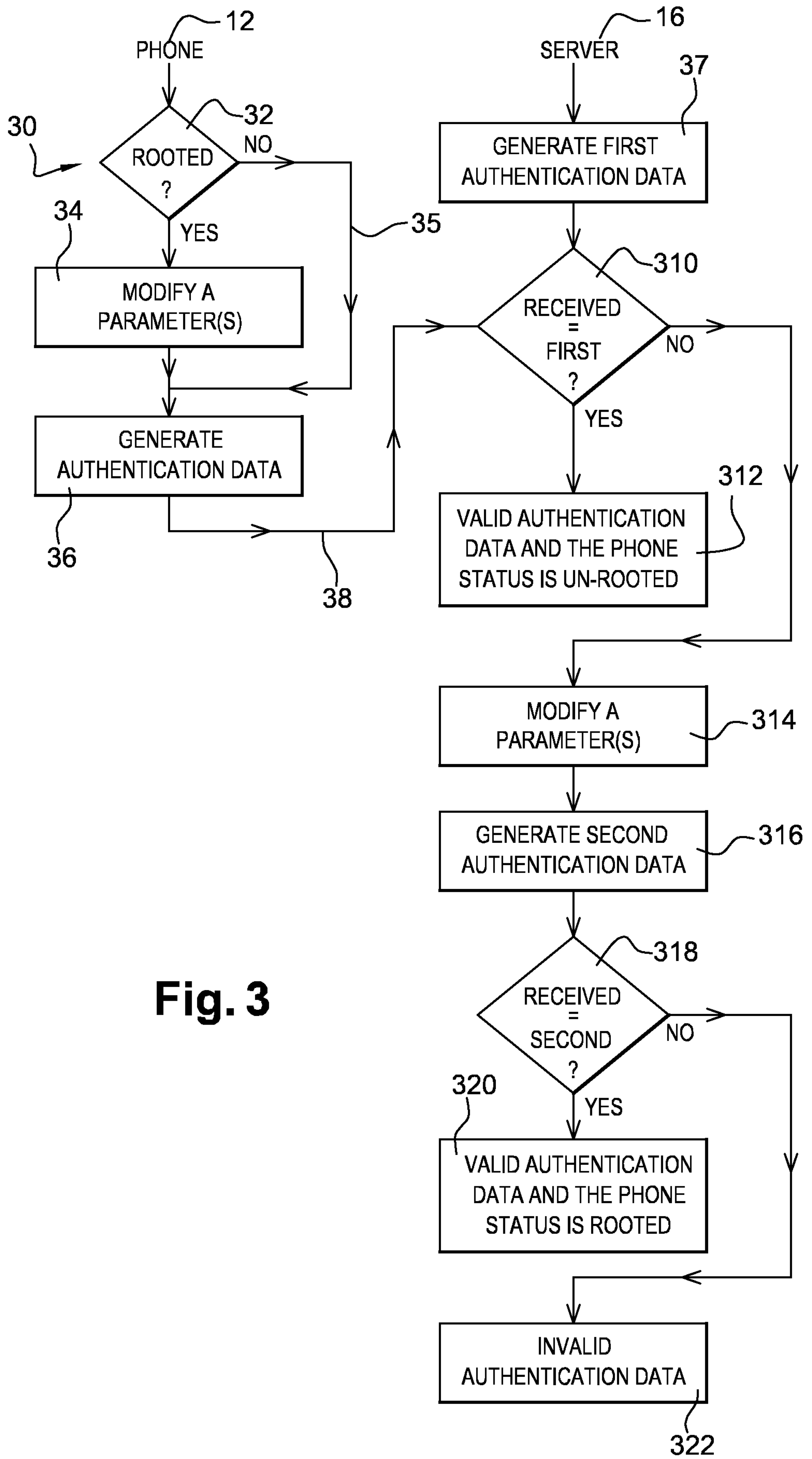
12
PHONE
30
32
ROOTED ?
NO
YES
34
MODIFY A PARAMETER(S)
35
GENERATE AUTHENTICATION DATA
36
38
16
SERVER
37
GENERATE FIRST AUTHENTICATION DATA
310
RECEIVED = FIRST ?
NO
YES
312
VALID AUTHENTICATION DATA AND THE PHONE STATUS IS UN-ROOTED
MODIFY A PARAMETER(S)
314
GENERATE SECOND AUTHENTICATION DATA
316
318
RECEIVED = SECOND ?
NO
YES
320
VALID AUTHENTICATION DATA AND THE PHONE STATUS IS ROOTED
INVALID AUTHENTICATION DATA
322

Fig. 3

Europäisches Patentamt
European Patent Office
Office européen des brevets

# EUROPEAN SEARCH REPORT

Application Number
EP 14 30 6629

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | JP 2014 112813 A (NTT DOCOMO INC) 19 June 2014 (2014-06-19) * abstract * & Hidetoshi Shikawa ET AL: "JP2014112813A -STATUS CHANGE NOTIFICATION METHOD, SUBSCRIBER AUTHENTICATION DEVICE, STATUS CHANGE DETECTION DEVICE AND MOBILE COMMUNICATION SYSTEM", , 19 June 2014 (2014-06-19), XP055180820, Retrieved from the Internet: URL:http://tfly.internal.epo.org/index.html?num=JP2014112813&type=PN&FAM1=JP2014112813/TXPJPEA [retrieved on 2015-04-01] * paragraphs [0010], [0040] - [0062], [0074], [0080] - [0083] * ----- | 1-10 | INV. H04W12/12 ADD. H04L29/06 H04W12/06 H04W12/10 |
| X | US 8 683 563 B1 (VAN DIJK MARTEN [US] ET AL) 25 March 2014 (2014-03-25) * column 3, line 35 - column 10, line 54 * * figures 1-5 * ----- | 1-10 | |
| | | | TECHNICAL FIELDS SEARCHED (IPC) |
| X | HAM YOU JOUNG ET AL: "DroidVulMon -- Android Based Mobile Device Vulnerability Analysis and Monitoring System", 2013 SEVENTH INTERNATIONAL CONFERENCE ON NEXT GENERATION MOBILE APPS, SERVICES AND TECHNOLOGIES, IEEE, 25 September 2013 (2013-09-25), pages 26-31, XP032525282, DOI: 10.1109/NGMAST.2013.14 [retrieved on 2013-11-07] * paragraph [000I] - paragraph [0III] * ----- | 1,8-10 | H04W H04L G06F |
| | -/-- | | |

The present search report has been drawn up for all claims

2

| Place of search | Date of completion of the search | Examiner |
|---|---|---|
| Munich | 1 April 2015 | Ghomrasseni, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 14 30 6629

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/173733 A1 (FORD DANIEL [US]) 19 June 2014 (2014-06-19) * paragraphs [0049] - [0055] * * paragraphs [0063] - [0073] * * figures 1-4 * ----- | 1,8-10 | |
| A | NTT DOCOMO ET AL: "Re-transmission of authentication request using the same quintet", 3GPP DRAFT; S3-000713, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sophia; 20001128, 28 November 2000 (2000-11-28), XP050270397, [retrieved on 2000-11-28] * the whole document * ----- | 1-10 | |
| | | | TECHNICAL FIELDS SEARCHED (IPC) |

The present search report has been drawn up for all claims

2

| Place of search | Date of completion of the search | Examiner |
|---|---|---|
| Munich | 1 April 2015 | Ghomrasseni, Z |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 30 6629

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2015

| Patent document cited in search report | Publication date | Patent family member(s) | Publication date |
|---|---|---|---|
| JP 2014112813 A | 19-06-2014 | NONE | |
| US 8683563 B1 | 25-03-2014 | NONE | |
| US 2014173733 A1 | 19-06-2014 | CA 2835933 A1 | 17-06-2014 |
| | | US 2014173733 A1 | 19-06-2014 |

EPO FORM P0459

For more details about this annex : see Official Journal of the European Patent Office, No. 12/82